(19) Europäisches Patentamt
European Patent Office
Office européen des brevets

(11) **EP 2 793 053 A1**

(12) **EUROPÄISCHE PATENTANMELDUNG**

(43) Veröffentlichungstag:
22.10.2014 Patentblatt 2014/43

(51) Int Cl.:
*G01T 1/20* (2006.01)

(21) Anmeldenummer: 13001978.9

(22) Anmeldetag: 16.04.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Agfa HealthCare N.V.**
**2640 Mortsel (BE)**

(72) Erfinder:
• **Reiser, Georg**
**80337 München (DE)**

• **Mair, Stephan**
**86157 Augsburg (DE)**
• **Schulz, Malte**
**80469 München (DE)**
• **Thoma, Ralph**
**86167 Augsburg (DE)**

(74) Vertreter: **Linsmeier, Josef**
**Wallinger Ricker Schlotter Tostmann**
**Patent- und Rechtsanwälte**
**Zweibrückenstrasse 5-7**
**80331 München (DE)**

(54) **Verfahren und Vorrichtungen zum Auslesen von in einer Speicherleuchtstoffschicht gespeicherten Röntgeninformationen**

(57) Die vorliegende Erfindung betrifft Verfahren sowie entsprechende Vorrichtungen zum Auslesen von in einer Speicherleuchtstoffschicht (1) gespeicherten Röntgeninformationen, wobei ein Stimulationslichtstrahl, welcher die Speicherleuchtstoffschicht (1) zur Aussendung von Emissionslicht anregen kann, mit einem Ablenkelement abgelenkt und dabei abwechselnd in einer ersten Richtung (V) und in einer der ersten Richtung (V) entgegengesetzten zweiten Richtung (R) über die Speicherleuchtstoffschicht (1) bewegt wird und während der Bewegungen des Stimulationslichtstrahls in der ersten und zweiten Richtung (V bzw. R) von der Speicherleuchtstoffschicht (1) ausgesandtes Emissionslicht mittels eines Detektors detektiert und in entsprechende erste bzw.

zweite Detektorsignale umgewandelt wird.

Um etwaige Bildartefakte auf möglichst einfache und zuverlässige Weise zu eliminieren oder zumindest zu reduzieren, werden erste und zweite Detektorsignale, welche während der Bewegungen des Stimulationslichtstrahls über die Speicherleuchtstoffschicht (1) oder über ein Referenzobjekt in der ersten bzw. zweiten Richtung (V bzw. R) erhalten wurden, miteinander verglichen. In Abhängigkeit vom Ergebnis dieses Vergleichs werden dann erste und/oder zweite Detektorsignale, welche während der Bewegungen des Stimulationslichtstrahls über die Speicherleuchtstoffschicht (1) in der ersten bzw. zweiten Richtung (V bzw. R) erhalten wurden, korrigiert.

Fig. 3

**Beschreibung**

Die vorliegende Erfindung betrifft Verfahren sowie entsprechende Vorrichtungen zum Auslesen von in einer Speicherleuchtstoffschicht gespeicherten Röntgeninformationen gemäß dem Oberbegriff der unabhängigen-Ansprüche.

Eine Möglichkeit zur Aufzeichnung von Röntgenbildern besteht darin, die durch ein Objekt, beispielsweise einen Patienten, hindurch tretende Röntgenstrahlung als latentes Bild in einer sogenannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Aus dem Stand der Technik ist bekannt, einen Stimulationslichtstrahl mittels eines oszillierenden Spiegels derart abzulenken, dass dieser abwechselnd in einer ersten Richtung und einer entgegengesetzten zweiten Richtung über die Speicherleuchtstoffplatte geführt wird. Hierbei können in den aus den jeweils erhaltenen Detektorsignalen zusammengesetzten Bildern störende Artefakte auftreten.

Es ist Aufgabe der vorliegenden Erfindung, Verfahren sowie entsprechende Vorrichtungen anzugeben, bei welchen Bildartefakte auf möglichst einfache und zuverlässige Weise eliminiert oder zumindest reduziert werden.

Die Aufgabe wird durch Verfahren bzw. Vorrichtungen gemäß den unabhängigen Ansprüchen gelöst.

Bei einem Verfahren gemäß einem ersten Aspekt der Lösung dieser Aufgabe wird ein Stimulationslichtstrahl, welcher die Speicherleuchtstoffschicht zur Aussendung von Emissionslicht anregen kann, mit einem Ablenkelement abgelenkt und dabei abwechselnd in einer ersten Richtung und in einer der ersten Richtung entgegengesetzten zweiten Richtung über die Speicherleuchtstoffschicht bewegt und während der Bewegungen des Stimulationslichtstrahls in der ersten und zweiten Richtung von der Speicherleuchtstoffschicht ausgesandtes Emissionslicht mittels eines Detektors detektiert und in entsprechende erste bzw. zweite Detektorsignale umgewandelt. Vorzugsweise werden erste und zweite Detektorsignale, welche während der Bewegungen des Stimulationslichtstrahls in der ersten bzw. zweiten Richtung erhalten wurden, miteinander verglichen und die ersten und/oder zweiten Detektorsignale in Abhängigkeit vom Ergebnis dieses Vergleichs korrigiert.

Eine entsprechende Vorrichtung gemäß dem ersten Aspekt der Lösung weist auf: eine Lichtquelle zur Erzeugung eines Stimulationslichtstrahls, welcher die Speicherleuchtstoffschicht zur Aussendung von Emissionslicht anregen kann, ein Ablenkelement zur Ablenkung des Stimulationslichtstrahls, so dass dieser abwechselnd in einer ersten Richtung und in einer der ersten Richtung entgegengesetzten zweiten Richtung über die Speicherleuchtstoffschicht bewegt wird, und einen Detektor zur Erfassung des während der Bewegungen des Stimulationslichtstrahls in der ersten und zweiten Richtung von der Speicherleuchtstoffschicht ausgesandten Emissionslichts und zur Umwandlung des erfassten Emissionslichts in entsprechende erste bzw. zweite Detektorsignale. Vorzugsweise ist eine Steuerungseinheit vorgesehen zur Verarbeitung der ersten und zweiten Detektorsignale in der Weise, dass erste und zweite Detektorsignale, welche während der Bewegungen des Stimulationslichtstrahls in der ersten bzw. zweiten Richtung erhalten wurden, miteinander verglichen werden und die ersten und/oder zweiten Detektorsignale in Abhängigkeit vom Ergebnis dieses Vergleichs korrigiert werden.

Bei einem Verfahren gemäß einem zweiten Aspekt der Lösung der Aufgabe wird ein Stimulationslichtstrahl, welcher ein Referenzobjekt und die Speicherleuchtstoffschicht zur Aussendung von Emissionslicht anregen kann, mit einem Ablenkelement abgelenkt und dabei abwechselnd in einer ersten Richtung und in einer der ersten Richtung entgegengesetzten zweiten Richtung über das Referenzobjekt bzw. die Speicherleuchtstoffschicht bewegt und während der Bewegungen des Stimulationslichtstrahls in der ersten und zweiten Richtung vom Referenzobjekt bzw. von der Speicherleuchtstoffschicht ausgesandtes Emissionslicht mittels eines oder mehrerer Detektoren detektiert und in entsprechende erste bzw. zweite Detektorsignale umgewandelt. Vorzugsweise werden erste und zweite Detektorsignale, welche während der Bewegungen des Stimulationslichtstrahls über das Referenzobjekt in der ersten bzw. zweiten Richtung erhalten wurden, miteinander verglichen und erste und/oder zweite Detektorsignale, welche während der Bewegungen des Stimulationslichtstrahls über die Speicherleuchtstoffschicht in der ersten bzw. zweiten Richtung erhalten wurden, in Abhängigkeit vom Ergebnis dieses Vergleichs korrigiert.

Eine entsprechende Vorrichtung gemäß dem zweiten Aspekt der Lösung weist auf: eine Lichtquelle zur Erzeugung eines Stimulationslichtstrahls, welcher ein Referenzobjekt und die Speicherleuchtstoffschicht zur Aussendung von Emissionslicht anregen kann, ein Ablenkelement zur Ablenkung des Stimulationslichtstrahls, so dass dieser abwechselnd in einer ersten Richtung und in einer der ersten Richtung entgegengesetzten zweiten Richtung über das Referenzobjekt bzw. die Speicherleuchtstoffschicht bewegt wird, und einen Detektor zur Erfassung des während der Bewegungen des Stimulationslichtstrahls in der ersten und zweiten Richtung vom Referenzobjekt bzw. von der Speicherleuchtstoffschicht ausgesandten Emissionslichts und zur Umwandlung des erfassten Emissionslichts in entsprechende erste bzw. zweite Detektorsignale. Vorzugsweise ist eine Steuerungseinheit vorgesehen zur Verarbeitung der ersten und zweiten Detektorsignale in der Weise, dass erste und zweite Detektorsignale, welche während der Bewegungen des Stimulationslichtstrahls über das Referenzobjekt in der ersten bzw. zweiten Richtung erhalten wurden, miteinander verglichen werden und erste und/oder zweite Detektorsignale, welche während der Bewegungen des Stimulationslichtstrahls über die Speicherleuchtstoffschicht in der ersten bzw. zweiten Richtung erhalten wurden, in Abhängigkeit vom Ergebnis dieses Vergleichs korrigiert werden.

Die vorstehend genannten Aspekte, welche Alternativlösungen der genannten Aufgabe darstellen, basieren auf dem gemeinsamen erfindungsgemäßen Ansatz, etwaige Artefakte in dem aus einer Vielzahl von ersten und zweiten Detektorsignalen zusammengesetzten Bild zu eliminieren oder zumindest zu reduzieren, indem Bildinformationen, die in den beim Scannen der Speicherleuchtstoffschicht und/oder eines Referenzobjekts, das z.B. fluoreszierende Markierungen aufweist, bei unterschiedlichen Scanrichtungen erhaltenen ersten und zweiten Detektorsignalen enthalten sind, miteinander verglichen werden und anhand des Ergebnisses dieses Vergleichs dann die beim Scannen der Speicherleuchtstoffschicht erhaltenen ersten und/oder zweiten Detektorsignale korrigiert werden.

Bei der Ableitung eines Bildes aus den ersten und zweiten Detektorsignalen wird im Allgemeinen ein Bezug hergestellt zwischen einer Ortsposition auf der Speicherleuchtstoffschicht und dem Zeitpunkt der Erfassung des Emissionslichts an diesem Ort bzw. der Erzeugung eines entsprechenden Detektorsignalwertes für diesen Ort. Hierfür werden für die beiden Bewegungsrichtungen des Stimulationslichtstrahls unterschiedliche Modell-Parameter benutzt. Es kann daher zu systematischen Fehlern bezüglich der Pixel-Zeit-Zuordnung in den beiden Bewegungsrichtungen kommen. Dies äußert sich durch Artefakte im Bild, u.a. in Form ausgefranster Kanten. Durch den beschriebenen Vergleich der anhand der Speicherleuchtstoffschicht selbst oder eines Referenzobjekts ermittelten ersten und zweiten Detektorsignale, welche insbesondere für benachbarte Zeilen ermittelt werden, können auf einfache und zuverlässige Weise Informationen darüber abgeleitet werden, inwieweit erste und zweite Detektorsignalverläufe benachbarter Zeilen aufgrund der unterschiedlichen Bewegungsrichtung des Stimulationslichtstrahls beim Scannen der Speicherleuchtstoffschicht entlang der beiden Zeilen voneinander abweichen. Solche Abweichungen können sich z.B. darin manifestieren, dass der erste und zweite Detektorsignalverlauf relativ zueinander in Zeilenrichtung verschoben sind und/oder, auch bei im Wesentlichen unveränderter Bildinformation, unterschiedliche Signalhöhen aufweisen. Die ersten und/oder zweiten Detektorsignale, die während der Bewegungen des Stimulationslichtstrahls in der ersten bzw. zweiten Richtung über die Speicherleuchtstoffplatte erhalten werden, können dann hinsichtlich der bei diesem Vergleich ermittelten Einflüsse bzw. Abweichungen korrigiert werden.

Im Ergebnis werden dadurch etwaige Artefakte in dem aus einer Vielzahl von ersten und zweiten Detektorsignalen zusammengesetzten Bild auf einfache und zuverlässige Weise eliminiert oder zumindest reduziert.

Vorzugsweise werden erste und zweite Detektorsignale hinsichtlich der darin enthaltenen Bildinformationen miteinander verglichen. Unter der Voraussetzung, dass sich die Bildinformationen einer ersten Zeile von einer benachbarten zweiten Zeile der Speicherleuchtstoffschicht nicht wesentlich unterscheiden, können anhand eventuell abweichender Bildinformationen zwischen erstem und zweitem Detektorsignalverlauf Einflüsse der unterschiedlichen Scanrichtungen auf das ausgelesene Bild zuverlässig ermittelt und korrigiert werden.

Bei einer besonders bevorzugten Ausführung werden die ersten und zweiten Detektorsignale miteinander verglichen, indem eine Korrelation, insbesondere eine Korrelationsfunktion, zwischen den ersten und zweiten Detektorsignalen ermittelt wird. Es ist ferner bevorzugt, dass aus dem Vergleich der ersten und zweiten Detektorsignale miteinander ein etwaiger räumlicher Versatz zwischen den ersten und zweiten Detektorsignalen ermittelt wird. Alternativ oder zusätzlich werden die ersten und/oder zweiten Detektorsignale in der Weise korrigiert, dass der ermittelte räumliche Versatz eliminiert oder zumindest vermindert wird. Vorzugsweise wird eine Korrelation von Bildinhalten zweier Zeilen durchgeführt, indem die Scanlinie in verschiedene Bereiche ("areas of interest", AOIs) eingeteilt wird und in jedem Bereich die Detektorsignale für die beiden Bewegungsrichtungen, d.h. die erste bzw. zweite Richtung, miteinander verglichen werden und die jeweilige räumliche Verschiebung ermittelt wird, bei welcher die Bildinformationen optimal übereinander liegen. Als Berechnungsverfahren kann vorzugsweise die Position des Maximums der Kreuzkorrelationsfunktion der Linien-Profile in den beiden Bewegungsrichtungen dienen. Die so ermittelten Verschiebungswerte werden bei einer entsprechenden Korrektur der ersten und/oder zweiten Detektorsignale herangezogen. Eine solche Korrektur wird auch als Geometrie-Kalibrierung bezeichnet, da die ersten und zweiten Detektorsignale hierbei auf ein gemeinsames räumliches Bezugssystem bezogen bzw. umgerechnet werden.

Vorzugsweise wird eine Korrelation von Bildinhalten durchgeführt, die - gemäß dem vorstehend beschriebenen ersten Aspekt der Lösung - beim Auslesen der Speicherleuchtstoffschicht ermittelt wurden. Alternativ oder zusätzlich kann aber auch eine Korrelation von Bildinhalten durchgeführt werden, die - gemäß dem vorstehend beschriebenen zweiten Aspekt der Lösung - anhand eines festen Referenzobjekts und/oder Musters, welches vorzugsweise vor jedem Scan der Speicherleuchtstoffschicht aufgenommen wird, ermittelt wurden. Hierzu ist ein fluoreszierendes Farbstoff-Muster bevorzugt, da dieses auch ohne vorherige Röntgenbelichtung ein Detektorsignal im Photomultiplier zur Folge hat. Gegebenenfalls kann es von Vorteil sein, hierbei zusätzlich etwaige Unterschiede im Nachleuchtverhalten zwischen dem Speicherphosphor und dem verwendeten Farbstoff zu berücksichtigen.

Die vorstehend erläuterten Maßnahmen tragen - einzeln oder in Kombination - dazu bei, dass etwaige Artefakte im erhaltenen Bild auf einfache und zuverlässige Weise eliminiert oder zumindest reduziert werden können.

Bei einer weiteren bevorzugten Ausgestaltung werden erste und zweite Detektorsignale durch Ermittlung, insbesondere Abschätzung, eines Fehlerprofils, welches Abweichungen zwischen mindestens einem ersten und mindestens einem zweiten Detektorsignal hinsichtlich der darin enthaltenen Informationen widerspiegelt, miteinander verglichen. Hierbei kann das, insbesondere abgeschätzte, Fehlerprofil einer Filterung unterzogen werden, wobei durch die Filterung des, insbesondere abgeschätzten, Fehlerprofils vorzugsweise ein Artefakt isoliert wird, welches davon herrührt, dass der Stimulationslichtstrahl abwechselnd in der ersten Richtung und in der der ersten Richtung entgegengesetzten zweiten Richtung über die Speicherleuchtstoffschicht bewegt wird. Erste und/oder zweite Detektorsignale können dann anhand des, gegebenenfalls gefilterten, Fehlerprofils bzw. des ermittelten Artefakts korrigiert werden. Bei einer weiteren bevorzugten Variante wird aus dem ersten Fehlerprofil ein zweites Fehlerprofil ermittelt, indem das erste Fehlerprofil einer Filterung unterzogen wird, bei welcher Bildinformationen eliminiert werden.

Die vorstehend erläuterten Maßnahmen tragen - einzeln oder in Kombination - ebenfalls dazu bei, dass etwaige Artefakte im erhaltenen Bild auf einfache und zuverlässige Weise eliminiert oder zumindest reduziert werden können.

Die erläuterten Ausgestaltungen stellen eine phänomenologische Korrektur von Unterschieden, die durch entgegengesetzte Bewegungsrichtungen des Stimulationslichtstrahls bedingt sind, in den Detektorsignalen dar, indem, vorzugsweise benachbarte Zeilen, anhand der darin enthaltenen Bilddaten miteinander verglichen werden. Alle systembedingten Unterschiede des Scanprozesses in den beiden Bewegungsrichtungen des Stimulationslichtstrahls äußern sich im erhaltenen Bild letztlich als eine artifizielle 2er-Periode im Bildsignal entlang der Slowscan-Richtung, d.h. der Vorschubrichtung der Bildplatte (sog. "2er-Banding"). Bei dem skizzierten phänomenologischen Ansatz werden die hierfür verantwortlichen physikalischen Ursachen nicht als bekannt vorausgesetzt, sondern Fehler bzw. Artefakte anhand der Bilddaten selbst ermittelt und korrigiert. Vorzugsweise werden hierbei folgende Schritte durchgeführt:

- Berechnung oder Abschätzung eines Fehlerprofils anhand der gemessenen Bilddaten;

- gegebenenfalls Filterung des Fehlerprofils zur genaueren Isolierung des Artefakts;

- Korrektur des Fehlers anhand des, ggf. gefilterten, Fehlerprofils.

Diese Schritte können in einer bevorzugten konkreten Umsetzung wie folgt aussehen: Als Fehlerprofil F(x, y) wird zunächst für jedes Pixel die relative Abweichung seines Wertes P(x, y) zu den Werten P(x, y-1) und P(x, y+1) aus den Nachbarzeilen (d.h. Zeilen mit der jeweils anderen Stimulationsstrahlbewegungsrichtung) interpolierten Werten berechnet. Im einfachsten Fall einer linearen Interpolation ergibt sich:

$$F(x, y) = \frac{2 \cdot P(x,y)}{P(x,y-1) + P(x,y+1)}$$

Das so ermittelte Fehlerprofil enthält neben dem zu korrigierenden Fehler noch Bildinformation. Dies sind in obigem Beispiel einer linearen Interpolation gerade die nichtlinearen Anteile der Signalverläufe. Da derartige Abweichungen jedoch nur auf kurzen Längenskalen (also bei hohen Bildfrequenzen) auftreten, können sie nun im zweiten Schritt durch einen Tiefpassfilter T eliminiert werden, beispielsweise durch einen sog. Running-Average- oder Median-Filter. Die Fehlerwerte in den beiden Schwingrichtungen unterscheiden sich systematisch und müssen daher getrennt betrachtet werden, also

$$F_{trace} \quad \rightarrow \quad T\left(F_{trace}\right)$$

$$F_{retrace} \quad \rightarrow \quad T\left(F_{retrace}\right) \quad ,$$

wobei sich die Indizes "trace" und "retrace" auf Zeilen der ersten bzw. zweiten Richtung des Stimulationslichtstrahls, insbesondere auf die Hin- bzw. Rückschwingung des Ablenkspiegels, beziehen.

Das in dieser Weise berechnete Fehlerprofil gibt artifizielle Relativabweichungen des Signalpegels zur jeweils anderen Schwingrichtung an. Zur Korrektur werden die Signalpegel vorzugsweise aneinander angeglichen:

$$P(x,y) \rightarrow \frac{P(x,y)}{\sqrt{F(x,y)}}.$$

Es ist hier auch eine entsprechend modifizierte einseitige Anwendung auf nur eine Schwingrichtung denkbar.

Bei einem alternativ oder zusätzlich anwendbaren Verfahren zum Auslesen von in einer Speicherleuchtstoffschicht gespeicherten Röntgenbildinformationen wird ein Stimulationslichtstrahl, welcher die Speicherleuchtstoffschicht zur Aussendung von Emissionslicht anregen kann, mit einem Ablenkelement abgelenkt und dabei abwechselnd in einer ersten Richtung und in einer der ersten Richtung entgegengesetzten zweiten Richtung über die Speicherleuchtstoffschicht bewegt und während der Bewegungen des Stimulationslichtstrahls in der ersten und zweiten Richtung von der Speicherleuchtstoffschicht ausgesandtes Emissionslicht mittels eines Detektors detektiert und in entsprechende erste bzw. zweite Detektorsignale umgewandelt. Vorzugsweise werden hierbei erste und/oder zweite Detektorsignale hinsichtlich Einflüssen korrigiert, welche davon herrühren, dass der Stimulationslichtstrahl abwechselnd in der ersten Richtung und in der der ersten Richtung entgegengesetzten zweiten Richtung über die Speicherleuchtstoffschicht bewegt wird.

Eine entsprechende Vorrichtung zum Auslesen von in einer Speicherleuchtstoffschicht gespeicherten Röntgenbildinformationen weist auf: eine Lichtquelle zur Erzeugung eines Stimulationslichtstrahls, welcher die Speicherleuchtstoffschicht zur Aussendung von Emissionslicht anregen kann, ein Ablenkelement zur Ablenkung des Stimulationslichtstrahls, so dass dieser abwechselnd in einer ersten Richtung und in einer der ersten Richtung entgegengesetzten zweiten Richtung über die Speicherleuchtstoffschicht bewegt wird, und einen Detektor zur Erfassung des während der Bewegungen des Stimulationslichtstrahls in der ersten und zweiten Richtung von der Speicherleuchtstoffschicht ausgesandten Emissionslichts und zur Umwandlung des erfassten Emissionslichts in entsprechende erste bzw. zweite Detektorsignale. Vorzugsweise ist ferner eine Steuerungseinheit vorgesehen zur Verarbeitung der ersten und zweiten Detektorsignale in der Weise, dass erste und/oder zweite Detektorsignale hinsichtlich Einflüssen korrigiert werden, welche davon herrühren, dass der Stimulationslichtstrahl abwechselnd in der ersten Richtung und in der der ersten Richtung entgegengesetzten zweiten Richtung über die Speicherleuchtstoffschicht bewegt wird. Etwaige Artefakte werden hierbei eliminiert oder zumindest reduziert.

Diese Lösung basiert auf dem Ansatz, das aus einer Vielzahl von ersten und zweiten Detektorsignalen zusammengesetzte Bild im Hinblick auf etwaige Artefakte zu korrigieren, die durch die Verwendung der in entgegengesetzten Bewegungsrichtungen des Stimulationslichtstrahls erhaltenen ersten und zweiten Detektorsignale zustande kommen können. So werden vorzugsweise Artefakte reduziert oder eliminiert, die auf den sog. destruktiven Ausleseprozess, bei welchem die in der Speicherleuchtstoffschicht gespeicherte Röntgeninformation bei der Bestrahlung mit Stimulationslicht zumindest teilweise gelöscht wird, und/oder ein Nachleuchten des Speicherphosphors nach der Bestrahlung mit dem Stimulationslichtstrahl zurückzuführen sind und sich unter anderem dadurch manifestieren, dass im gespeicherten Röntgenbild senkrecht zur ersten und zweiten Richtung verlaufende Kanten im ausgelesenen Bild als ausgefranste Kanten erscheinen, die in diesem Fall ein Artefakt darstellen. Alternativ oder zusätzlich können Artefakte reduziert oder eliminiert werden, die darauf zurückzuführen sind, dass die Empfindlichkeit der Vorrichtung, insbesondere des Detektors, für das zu erfassende Emissionslicht von der Höhe und/oder dem Verlauf der, insbesondere für dieselbe Zeile, jeweils zuvor erhaltenen ersten bzw. zweiten Detektorsignale abhängt. So kann z.B. die Empfindlichkeit des Detektors in der ersten Richtung vorübergehend reduziert sein, wenn unmittelbar zuvor ein "heller" Bereich der Speicherleuchtstoffschicht in derselben Zeile Emissionslicht mit relativ hoher Intensität aussendet, so dass der Detektor vorübergehend "geblendet" wird und erst wieder nach einer bestimmten Zeitspanne die volle Empfindlichkeit zeigt. Für Ortsbereiche, die von dem hellen Bereich aus betrachtet in Richtung der ersten Richtung liegen, werden daher Detektorsignale mit reduzierter Signalhöhe erzeugt. Wird der helle Bereich der Speicherleuchtstoffschicht anschließend mit dem Stimulationslichtstrahl in der entgegengesetzten zweiten Richtung abgetastet, so werden die Empfindlichkeit des Detektors und die entsprechenden zweiten Detektorsignale ebenfalls vorübergehend herabgesetzt, allerdings für Ortsbereiche, die von dem hellen Bereich aus betrachtet in Richtung der zweiten Richtung liegen. Im erhaltenen ausgelesenen Bild, das aus einer Vielzahl von ersten und zweiten Detektorsignalen zusammengesetzt ist, erscheinen dadurch Strukturen zu beiden Seiten eines solchen hellen Bereichs abwechselnd, d.h. von einer Zeile zur nächsten, unterschiedlich hell, was in diesem Fall ein Artefakt darstellt.

Insgesamt werden auch durch die vorstehend beschriebene, alternativ oder zusätzlich anwendbare Lösung etwaige Artefakte in dem aus einer Vielzahl von ersten und zweiten Detektorsignalen zusammengesetzten Bild auf einfache und zuverlässige Weise eliminiert oder zumindest reduziert.

Vorzugsweise werden erste und/oder zweite Detektorsignale unter Berücksichtigung mindestens einer Punktbildfunktion korrigiert, welche für einen Verlauf von ersten oder zweiten Detektorsignalen entlang der ersten bzw. zweiten Richtung im Falle einer punktförmigen Anregung der Speicherleuchtstoffschicht charakteristisch ist. Aufgrund des destruktiven Ausleseprozesses und des Nachleuchtens des Speicherphosphors kann die Punktbildfunktion des Abbildungssystems, welches das angeregte Emissionslicht auf den Detektor abbildet, relativ zur jeweiligen Position des Stimulationslichtstrahls, z.B. Laserspots, auf der Speicherleuchtstoffschicht versetzt sein und darüber hinaus einen leicht asymmetrisch geformten Peak aufweisen. Durch die unterschiedlichen Bewegungsrichtungen des Laserspots auf der Speicherleuchtstoffschicht ergeben sich in der ersten und zweiten Richtung somit unterschiedliche Punktbildfunktionen, welche u.a. ein Ausfransen von Kanten zur Folge haben. Anhand der für die erste und/oder zweite Richtung maßgeblichen Punktbildfunktion wird der Verlauf, insbesondere Lage und/oder Höhe, der ersten und/oder zweiten Detektorsignale auf einfache Weise korrigiert, so dass solche Artefakte nicht mehr auftreten oder vermindert werden.

Es ist ferner bevorzugt, dass die mindestens eine Punktbildfunktion vor dem Auslesen der Speicherleuchtstoffschicht bestimmt wird. Die mindestens eine Punktbildfunktion liegt dadurch beim Ausleseprozess bereits vor und kann bei der Korrektur berücksichtigt werden, ohne während des Ausleseprozesses erst ermittelt werden zu müssen. Alternativ oder zusätzlich wird die Bestimmung der Punktbildfunktion durch Messung, beispielsweise an einer mit einem bestimmten Muster belichteten Speicherleuchtstoffschicht, oder mittels einer numerischen Simulation des Ausleseprozesses vorgenommen. Eine Messung erlaubt eine exakte und einfache Ermittlung der mindestens einen Punktbildfunktion. Anhand einer numerischen Simulation kann die Punktbildfunktion auf einfache und sichere Weise ermittelt werden, ohne dass hierzu eine zusätzliche Messung erforderlich ist. Insgesamt tragen die vorstehend genannten Ausführungen - einzeln oder in Kombination - dazu bei, dass etwaige Artefakte auf einfache und zuverlässige Weise eliminiert oder zumindest reduziert werden. Alternativ ist es aber auch möglich, dass die Punktbildfunktion erst nach dem Auslesen der Speicherleuchtstoffschicht und einer Zwischenspeicherung der hierbei erhaltenen Detektorsignale bestimmt wird.

Bei einer weiteren Ausgestaltung ist vorgesehen, dass erste und/oder zweite Detektorsignale einer Entfaltung, einer sog. Dekonvolution oder Rückfaltung, unterzogen werden, bei welcher aus den ersten bzw. zweiten Detektorsignalen und der jeweils charakteristischen Punktbildfunktion korrigierte erste bzw. zweite Detektorsignale erhalten werden. Die Entfaltung kann z.B. mittels eines WienerFilters realisiert werden. Vorzugsweise werden hierbei aus ersten Detektorsignalen und einer ersten Punktbildfunktion, die das Abbildungssystem für den Fall charakterisiert, dass der Stimulationslichtstrahl in der ersten Richtung über die Speicherleuchtstoffschicht bewegt wird, korrigierte erste Detektorsignale ermittelt. Alternativ oder zusätzlich werden aus zweiten Detektorsignalen und einer zweiten Punktbildfunktion, die das Abbildungssystem für den Fall charakterisiert, dass der Stimulationslichtstrahl in der zweiten Richtung über die Speicherleuchtstoffschicht bewegt wird, korrigierte zweite Detektorsignale ermittelt. Diesen Ausgestaltungen liegt der Ansatz zugrunde, dass die ersten bzw. zweiten Detektorsignale durch eine Faltung der örtlichen Verteilung von in der Speicherleuchtstoffschicht angeregten Farbzentren mit der ersten bzw. zweiten Punktbildfunktion des Abbildungssystems gegeben sind, so dass eine Entfaltung als Umkehrung der Faltung korrigierte erste bzw. zweite Detektorsignale liefert, welche in diesem Falle dem "wahren" Emissionslichtintensitätsverlauf, bei welchem Einflüsse aufgrund des Scannens in unterschiedlichen Richtungen eliminiert sind, entlang einer Zeile auf der Speicherleuchtstoffschicht entsprechen. Auch diese Ausführung trägt weiter dazu bei, dass etwaige Artefakte auf besonders einfache und zuverlässige Weise eliminiert oder zumindest reduziert werden.

Alternativ oder zusätzlich werden erste und/oder zweite Detektorsignale durch eine Filterung korrigiert, bei welcher ein Filterwert, der zur zweiten Ableitung der ersten bzw. zweiten Detektorsignale proportional ist, mit den ersten bzw. zweiten Detektorsignalen verrechnet wird, insbesondere zu den ersten bzw. zweiten Detektorsignalen addiert oder von den ersten bzw. zweiten Detektorsignalen subtrahiert wird. Diese Ausführung basiert auf der überraschenden Erkenntnis, dass Abweichungen im Signalverlauf proportional zur Krümmung, d.h. zur zweiten Ableitung, des Signals, zu sein scheinen. Ein entsprechender Filter hat die Form:

$$P(x, y) \rightarrow P(x, y) + c \cdot ED \cdot \left| \frac{d^2 P(x, y)}{dx^2} \right| \quad ,$$

wobei P(x, y) den Pixelwert, d.h. die Höhe des ersten bzw. zweiten Detektorsignals, am Ort (x, y) auf der Speicherleuchtstoffschicht bezeichnet und c ein konstanter Filterparameter ist. Der Parameter ED kann Werte $\pm 1$ annehmen,

je nachdem, ob das Signal an der betrachteten Pixelposition gerade zeitlich steigend oder fallend ist. Bei dem Filterwert $c \cdot ED \cdot |d^2P(x,y)/dx^2|$ handelt es sich vorzugsweise um einen empirisch ermittelten Filterwert. Auch diese Ausgestaltung trägt dazu bei, etwaige Artefakte auf besonders einfache und zuverlässige Weise zu eliminieren oder zumindest zu reduzieren.

Alternativ oder zusätzlich kann es von Vorteil sein, erste und/oder zweite Detektorsignale durch eine Filterung zu korrigieren, bei welcher ein Filterwert, der zur n-ten Ableitung der ersten bzw. zweiten Detektorsignale proportional ist, mit den ersten bzw. zweiten Detektorsignalen verrechnet wird, insbesondere zu den ersten bzw. zweiten Detektorsignalen addiert oder von den ersten bzw. zweiten Detektorsignalen subtrahiert wird, wobei n größer als zwei ist.

Zur Verbesserung des Rauschverhaltens kann es vorteilhaft sein, die zweite Ableitung auf Basis eines geglätteten Signals $\langle P(x,y) \rangle$ zu berechnen. Der Filterwert ist hierbei zur zweiten Ableitung der geglätteten ersten bzw. zweiten Detektorsignale $|d^2\langle P(x,y)\rangle/dx^2|$ proportional.

Vorzugsweise werden erste und/oder zweite Detektorsignale unter Berücksichtigung einer von der Bewegung des Stimulationslichtstrahls in der ersten bzw. zweiten Richtung abhängigen Empfindlichkeit der Vorrichtung, insbesondere des Detektors, für das Emissionslicht korrigiert. Hierbei ist bevorzugt, dass die Empfindlichkeit der Vorrichtung, insbesondere des Detektors, vom jeweiligen Ort des Stimulationslichtstrahls auf der Speicherleuchtstoffschicht abhängig ist. Alternativ oder zusätzlich wird die Empfindlichkeit der Vorrichtung während der Bewegung des Stimulationslichtstrahls in der ersten bzw. zweiten Richtung für unterschiedliche Orte des Stimulationslichtstrahls auf der Speicherleuchtstoffschicht ermittelt. Vorzugsweise wird bei der Ermittlung der Empfindlichkeit der Vorrichtung für einen Ort des Stimulationslichtstrahls auf der Speicherleuchtstoffschicht zumindest ein Teil des während der Bewegung des Stimulationslichtstrahls in der ersten bzw. zweiten Richtung bis zu diesem Ort erhaltenen ersten bzw. zweiten Detektorsignals berücksichtigt.

Bei den vorstehend aufgeführten Ausgestaltungen werden die vom Detektor erzeugten ersten bzw. zweiten Detektorsignale vorzugsweise unter Berücksichtigung der Nichtlinearität der Empfindlichkeit des Systems, insbesondere des Detektors, wie z.B. eines Photomultipliers (PMT), und/oder des vorausgegangenen Detektorsignalverlaufs korrigiert. Auf diese Weise können etwaige Änderungen der PMT-Empfindlichkeit während eines Scans, die von der Vorgeschichte des Signals während des Scans abhängig und in der ersten und zweiten Richtung des Stimulationslichtstrahls signifikant unterschiedlich sein kann, berücksichtigt werden. Dies trägt ebenfalls dazu bei, etwaige Artefakte im ausgelesenen Bild auf einfache und zuverlässige Weise zu eliminieren oder zumindest zu reduzieren.

Zur Korrektur kann die jeweils aktuelle PMT Empfindlichkeitsverlust während eines Scans durch ein Modell ermittelt und kompensiert werden. Dazu wird zunächst eine Differentialgleichung für die PMT-Empfindlichkeit aufgestellt, die dann anhand des gemessenen Signalverlaufs mittels analytischer oder numerischer Methoden, beispielsweise im Euler-Verfahren, während des Scans integriert wird. Eine Modellgleichung kann vorzugsweise wie folgt aussehen:

$$\frac{dS(t)}{dt} = \left(1 - S(t)\right) \cdot k_1 - LPV_{cor}(t) \cdot k_2 \, .$$

Hierbei bezeichnet $dS(t)/dt$ die Änderung der PMT-Empfindlichkeit $S(t)$ nach der Zeit $t$, $(1 - S(t)) \, k_1$ die Erholung der PMT-Empfindlichkeit mit einer Zeitkonstante $k_1$ und $LPV_{cor}(t) \, k_2$ die Abnahme der PMT-Empfindlichkeit durch einfallendes Licht mit einer Zeitkonstante $k_2$.

Weitere Vorteile, Merkmale und Anwendungsmöglichkeiten der vorliegenden Erfindung ergeben sich aus der nachfolgenden Beschreibung in Zusammenhang mit den Figuren. Es zeigen:

Fig. 1 eine schematische Darstellung eines Beispiels einer Vorrichtung zum Auslesen von Speicherleuchtstoffschichten;

Fig. 2 ein Beispiel zur Veranschaulichung der Funktion des Ablenkelements in einer schematischen Seitenansicht;

Fig. 3 ein Beispiel für einen typischen Verlauf des abgelenkten Stimulationslichtstrahls auf der Speicherleuchtstoffschicht;

Fig. 4 ein Beispiel für den Verlauf eines ersten und zweiten Detektorsignals; und

Fig. 5 ein Beispiel für den Verlauf einer ersten und zweiten Punktbildfunktion.

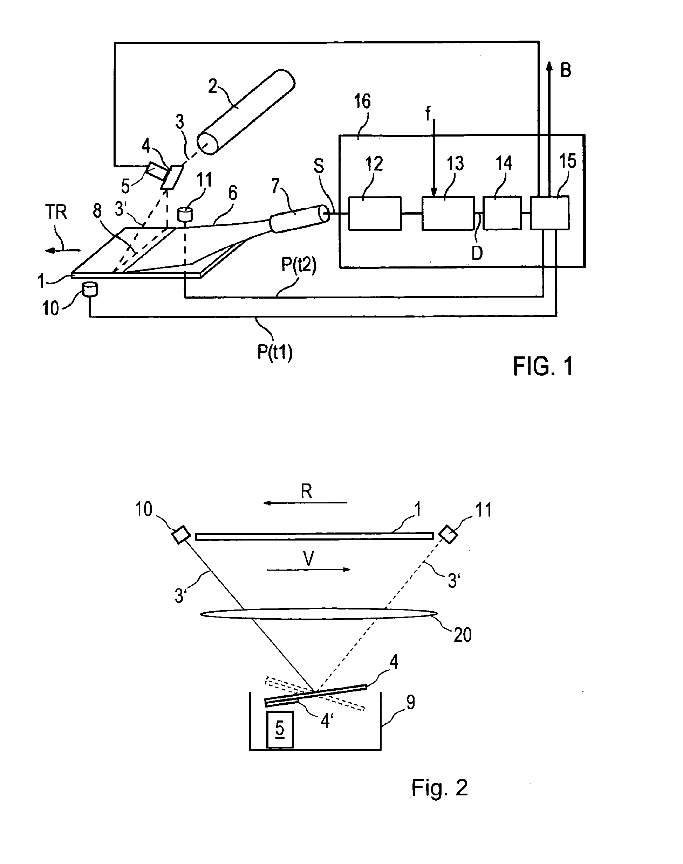

Figur 1 zeigt eine Vorrichtung zum Auslesen einer Speicherleuchtstoffschicht 1. Durch einen Laser 2 wird ein Stimulationslichtstrahl 3 erzeugt, welcher durch ein Ablenkelement 4 derart abgelenkt wird, dass sich dieser entlang einer Zeile 8 über die auszulesende Speicherleuchtstoffschicht 1 bewegt. Das Ablenkelement 4 weist eine reflektierende Fläche, insbesondere in Form eines Spiegels, auf, welche durch eine Antriebseinrichtung 5 in Oszillation versetzt wird.

Während der Bewegung des abgelenkten Stimulationslichtstrahls 3' über die Speicherleuchtstoffschicht 1 sendet diese in Abhängigkeit der darin gespeicherten Röntgeninformation Emissionslicht aus, welches von einer optischen Sammeleinrichtung 6, beispielsweise einem PMMA-Lichtsammler, einem Lichtleiterbündel oder einer geeigneten Spiegeleinrichtung, gesammelt und von einem optischen Detektor 7, vorzugsweise einem Photomultiplier (PMT), erfasst und dabei in ein entsprechendes Detektorsignal S umgewandelt wird.

Das Detektorsignal S wird einer Verarbeitungseinrichtung 16 zugeführt, in welcher Bildsignalwerte B für einzelne Bildpunkte des ausgelesenen Röntgenbildes abgeleitet werden. Soll die ausgelesene Zeile 8 beispielsweise aus 1000 Bildpunkten zusammengesetzt sein, so werden aus dem beim Auslesen der Zeile 8 erhaltenen Detektorsignal S 1000 entsprechende Bildsignalwerte B abgeleitet.

Durch einen Transport der Speicherleuchtstoffschicht 1 in Transportrichtung TR (sog. Slowscan-Richtung) mittels einer Transporteinrichtung (nicht dargestellt) wird ein sukzessives Auslesen einzelner Zeilen 8 der Speicherleuchtstoffschicht 1 erreicht und damit ein zweidimensionales, aus einzelnen Bildpunkten mit jeweils einem zugehörigen Bildsignalwert B zusammengesetztes Röntgenbild erhalten. Beträgt die Anzahl der in Transportrichtung TR ausgelesenen Zeilen 8 beispielsweise 1500, so werden mit jeweils 1000 Bildpunkten pro Zeile 8 für das ausgelesene Röntgenbild insgesamt 1500 mal 1000 Bildpunkte mit jeweils einem zugehörigen Bildsignalwert B erhalten.

Grundsätzlich ist es auch möglich, die Speicherleuchtstoffschicht 1 ortsfest zu lagern und die restlichen Komponenten, insbesondere Laser 2, Ablenkelement 4, Sammeleinrichtung 6 und Detektor 7, relativ zur Speicherleuchtstoffschicht 1 zu bewegen.

Das Detektorsignal S wird zunächst durch ein Tiefpassfilter 12 gefiltert, wobei höherfrequente Anteile des Detektorsignals S, insbesondere Rauschanteile, eliminiert werden. Das gefilterte Detektorsignal S wird dann einem Analog-DigitalWandler 13 zugeführt und dort mit einer Abtastfrequenz f abgetastet, wobei bei jedem Abtastvorgang ein Detektorsignal D in jeweils digitalen Einheiten erhalten wird. Nach einer Zwischenspeicherung im Speicher 14 werden in einer Steuerungseinheit 15 aus den Detektorsignalwerten D die Bildsignalwerte B berechnet.

Die gezeigte Vorrichtung weist ferner zwei Sensoren 10 und 11 auf, die zu beiden Seiten der Speicherleuchtstoffschicht 1 in der Weise angeordnet sind, dass auf diese der abgelenkte Stimulationslichtstrahl 3' auftreffen kann, bevor bzw. nachdem dieser die Speicherleuchtstoffschicht 1 entlang der Zeile 8 überstreicht bzw. überstrichen hat. Wird der Stimulationslichtstrahl 3 mit dem Ablenkelement 4 in Richtung der Zeile 8 abgelenkt, so passiert dieser vor dem eigentlichen Abtasten der Zeile 8 zunächst den ersten Sensor 10 und danach den zweiten Sensor 11. Das Licht des abgelenkten Stimulationslichtstrahls 3' wird dabei von den beiden lichtempfindlichen Sensoren 10 und 11 erfasst und in entsprechende elektrische Signale P(t1) und P(t2) zu den Zeitpunkten t1 bzw. t2 umgewandelt und an die Steuerungseinheit 15 der Verarbeitungseinrichtung 16 weitergeleitet.

Die Steuerungseinheit 15 ist mit der Antriebseinrichtung 5 zum Antrieb des Ablenkelements 4 verbunden und steuert dieses in der Weise, dass das Ablenkelement 4 durch Abgabe von Abtriebsenergie von der Antriebseinrichtung 5 nur dann aktiv angetrieben wird, wenn oder nachdem der abgelenkte Stimulationslichtstrahl 3' eine bestimmte Richtung und/oder Position eingenommen hat. Im gezeigten Beispiel überstreicht der abgelenkte Stimulationslichtstrahl 3' zumindest einen der beiden Sensoren 10 und 11, woraufhin dieser einen elektrischen Puls P an die Steuerungseinheit 15 sendet, welche - ggf. nach einer vorgebbaren Zeitverzögerung - die Antriebseinrichtung 5 in der Weise steuert, dass diese zeitweise Antriebsenergie, insbesondere in Form eines Antriebsenergiepulses, an das oszillierende Ablenkelement 4 abgibt und dabei dessen Oszillation, vorzugsweise im Bereich einer Resonanzfrequenz des Ablenkelements 4, aufrechterhält.

Figur 2 zeigt ein Beispiel zur Veranschaulichung der Funktion des Ablenkelements in einer schematischen Seitenansicht. Das Ablenkelement 4 weist eine reflektierende Fläche auf, welche, beispielsweise mittels einer nicht dargestellten Torsionsfeder, derart an einem Gehäuse 9 gelagert ist, dass bei einer Auslenkung des Ablenkelements 4 um eine senkrecht zur Zeichenebene verlaufende Mittelachse eine Rückstellkraft erzeugt wird, die das Ablenkelement 4 in die entgegengesetzte Richtung auslenkt (siehe gestrichelt dargestelltes Auslenkelement).

Die Auslenkung des Ablenkelements 4 wird vorzugsweise durch einen Elektromagneten 5 angetrieben, welcher durch Anlegen einer elektrischen Spannung und den damit einhergehenden Stromfluss ein magnetisches Feld erzeugt, das auf ein am Ablenkelement 4 befindliches magnetisches Element 4' wirkt. Je nach Material des magnetischen Elements 4' kann dieses durch den Elektromagneten 5 sowohl angezogen als auch abgestoßen werden oder nur angezogen werden. Ersteres ist der Fall, wenn das magnetische Element permanentmagnetische Substanzen aufweist. Letzteres ist der Fall bei Verwendung eines ferromagnetischen Materials, dessen Magnetisierung nicht permanent erhalten bleibt.

Um das Ablenkelement 4 von seiner Ruheposition zunächst in einen oszillierenden Zustand zu bringen, werden an den Elektromagneten 5 fortlaufend Spannungspulse einer bestimmten Dauer und Frequenz angelegt, wodurch schließlich die Amplitude der Oszillation des Ablenkelements 4 so groß wird, dass der abgelenkte Stimulationslichtstrahl 3' über die Breite der abzutastenden Speicherleuchtstoffschicht 1 hinaus läuft und dabei insbesondere auch auf den ersten bzw. zweiten Sensor 10 bzw. 11 trifft.

Zwischen dem Ablenkelement 4 und der Speicherleuchtstoffschicht 1 ist im gezeigten Beispiel eine optische Einrichtung 20, eine sog. Postscan-Optik, vorgesehen, durch welche der abgelenkte Stimulationslichtstrahl 3' einerseits auf die Speicherleuchtstoffschicht 1 fokussiert wird und andererseits dessen Radialbewegung in eine geradlinige Bewegung entlang der Zeile 8 (siehe Fig. 1) auf der Speicherleuchtstoffschicht 1 umgewandelt wird. Alternativ oder zusätzlich zu einer Postscan-Optik kann auch ein sog. Variofokus verwendet werden, welcher zwischen dem Laser 2 und dem Ablenkelement 4 angeordnet ist (sog. Prescan-Optik) und den Laserstrahl 3 so formt, dass dieser nach seiner Ablenkung durch das Ablenkelement 4 entlang der Linie 8 auf der Speicherleuchtstoffschicht 1 gleichmäßig fokussiert wird. Eine Postscan-Optik kann dann entfallen. Grundsätzlich ist es aber auch möglich, auf die optische Einrichtung 20 vollständig zu verzichten und die dann auftretenden Verzerrungen aus dem erhaltenen Röntgenbild herauszurechnen, beispielsweise anhand von vor dem Auslesen ermittelten Informationen zum Verhalten des Stimulationslichtstrahls.

Durch die vorstehend beschriebenen Maßnahmen wird das Ablenkelement 4 zu einer Oszillation um seine Mittelachse angeregt, so dass der auf die reflektierende Fläche auftreffende Stimulationslichtstrahl 3 (siehe Fig. 1) derart abgelenkt wird, dass dieser abwechselnd in einer ersten Richtung V, welche auch als "Trace" bezeichnet wird, und einer der ersten Richtung V entgegengesetzten zweiten Richtung R, welche auch als "Retrace" bezeichnet wird, die Speicherleuchtstoffschicht 1 überstreicht und diese dabei zur Aussendung von Emissionslicht anregt. Die Speicherleuchtstoffschicht 1 wird hierbei also sowohl in Trace- als auch in Retrace-Richtung gescannt, d.h. ausgelesen, weshalb diese Art des Auslesens auch als bidirektionales Scannen bezeichnet werden kann.

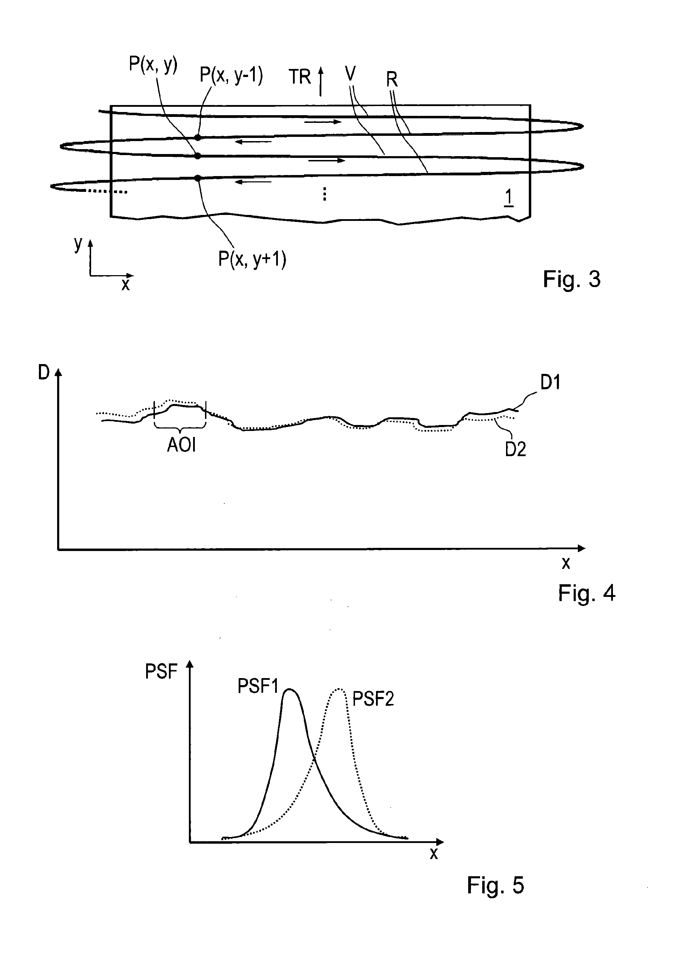

Ein Beispiel für einen typischen Verlauf des abgelenkten Stimulationslichtstrahls 3' auf der Speicherleuchtstoffschicht 1 zeigt Figur 3. Aufgrund der Oszillationsbewegung des Ablenkelements 4 nimmt die Geschwindigkeit des abgelenkten Stimulationslichtstrahls 3' jeweils zu den Rändern der Speicherleuchtstoffschicht 1 hin ab, was bei einer konstanten Vorschubgeschwindigkeit der Speicherleuchtstoffschicht in Transportrichtung TR dazu führt, dass die Bahn des Stimulationslichtstrahls 3' auf der Speicherleuchtstoffschicht 1 eher einem flachen sinusförmigen Verlauf als einer exakt geradlinigen Zick-Zack-Bewegung folgt.

In dem in Fig. 3 gezeigten Beispiel ist der Abstand zwischen den einzelnen in Trace- und Retrace-Richtung V bzw. R gescannten Zeilen der Speicherleuchtstoffschicht 1 aus Anschaulichkeitsgründen sehr groß gewählt. in Wirklichkeit liegen die Zeilen jedoch so eng beieinander, dass die gesamte Fläche der Speicherleuchtstoffschicht 1 im Wesentlichen lückenlos ausgelesen wird.

Bei den durch bidirektionales Scannen erhaltenen Bildern können störende Artefakte auftreten, wie z.B. das sog. 2er-Banding sowie ausgefranste Kanten, welche die diagnostische Aussagekraft oder Tauglichkeit der erhaltenen Bilder stark beeinträchtigen können. Durch die verschiedenen Aspekte bzw. Ausführungen der erfindungsgemäßen Lösungen werden solche Artefakte eliminiert oder zumindest reduziert, indem insbesondere Effekte aufgrund eines Empfindlichkeitsverlustes des PMTs bei Hochdosisaufnahmen, eines durch das destruktive Auslesen verursachten Vorausleseversatzes und asymmetrischen Punktbildfunktion, einer eventuellen asymmetrischen Bewegung des Laserspots über die Speicherleuchtstoffschicht sowie eines Nachleuchtens des Speicherphosphors berücksichtigt und eliminiert bzw. reduziert werden. Dies wird in Folgenden anhand von Beispielen näher erläutert.

Figur 4 zeigt ein Beispiel für den Verlauf eines ersten Detektorsignals D1 sowie eines zweiten Detektorsignals D2, die beim Scannen benachbarter Zeilen der Speicherleuchtstoffschicht 1 in Trace-Richtung R bzw. Retrace-Richtung V erhalten wurden, entlang der sog. Fastscan-Richtung x.

Wie dem Beispiel zu entnehmen ist, weicht der Verlauf des ersten Detektorsignals D1 vom Verlauf des zweiten Detektorsignals D2 systematisch ab, obwohl die Bildinhalte der benachbarten Zeilen der Speicherleuchtstoffschicht im Wesentlichen gleich sind. Im dargestellten Fall ist der räumliche Verlauf der zweiten Detektorsignale D2 gegenüber den ersten Detektorsignalen D1 um einen bestimmten räumlichen Versatz in Retrace-Richtung R (vgl. Fig. 3) verschoben. Diese durch die unterschiedlichen Bewegungsrichtungen V bzw. R des Stimulationslichtstrahls 3' verursachten Abweichungen führen im Gesamtbild, das aus mehreren ersten und zweiten Detektorsignalen D1 und D2 zusammengesetzt wird, unter anderem zu ausgefransten Kanten.

Zur Korrektur der systematischen Fehler wird vorzugsweise eine Korrelation von Bildinhalten der beiden Detektorsignale D1 und D2 durchgeführt. Dazu wird der jeweilige Verlauf der Detektorsignale D1 und D2 in verschiedene Bereiche AOI eingeteilt, wobei in Fig. 4 aus Anschaulichkeitsgründen lediglich ein solcher Bereich eingezeichnet ist. In jedem dieser Bereiche AOI werden die Detektorsignale D1 und D2 der beiden Schwingrichtungen V bzw. R miteinander verglichen und eine räumliche Verschiebung ermittelt, bei welcher die Bildinhalte übereinander liegen. Die Verschiebung wird vorzugsweise anhand einer Bestimmung einer Kreuzkorrelationsfunktion der Profile der ersten und zweiten Detektorsignale D1 und D2 ermittelt. Anhand der auf diese Weise ermittelten Verschiebung kann das erste und/oder zweite Detektorsignal D1 bzw. D2 entsprechend korrigiert, d.h. räumlich verschoben, werden.

Bei der vorstehend beschriebenen Ausführung wird die Korrektur der ersten und zweiten Detektorsignale D1 und D2 anhand eines Vergleichs, insbesondere einer Korrelation, von Bildinhalten dieser Detektorsignale D1 und D2 vorgenommen. Alternativ ist es aber auch möglich, vor dem Auslesen der Speicherleuchtstoffplatte ein Referenzobjekt zu scannen und durch Vergleich, insbesondere Korrelation, der hierbei ermittelten ersten und zweiten Detektorsignale D1 und D2 Korrekturwerte, insbesondere eine Verschiebung, zu ermitteln, anhand welcher dann die beim Auslesen der Speicherleuchtstoffschicht die erhaltenen ersten und zweiten Detektorsignale korrigiert werden. Als Referenzobjekt wird vorzugsweise ein fluoreszierendes Farbstoff-Muster verwendet, da dieses auch ohne Belichtung mit Röntgenstrahlung Emissionslicht aussendet, wenn es mit dem Stimulationslichtstrahl angeregt wird. Das Referenzobjekt selbst hat vorzugsweise eine Form und/oder Größe, die der in den Figuren 1 bis 3 dargestellten Speicherleuchtstoffschicht 1 entspricht. Die Handhabung des Referenzobjekts beim Auslesen des von diesem ausgehenden Emissionslichts ist daher identisch mit der Handhabung der Speicherleuchtstoffschicht 1. Aus Anschaulichkeitsgründen wurde daher auf die zusätzliche Darstellung eines Referenzobjekts verzichtet. Im Falle der vorstehend beschriebenen Alternative kann vielmehr die in den Figuren 1 bis 3 dargestellte Speicherleuchtstoffschicht 1 als Referenzobjekt betrachtet werden. Vorzugsweise weist das Referenzobjekt eine nicht-fluoreszierende Unterlage auf, auf welcher ein fluoreszierendes Referenzmuster, beispielsweise ein Farbstoff, auf- und/oder eingebracht ist.

Wie dem in Fig. 4 dargestellten Verlauf des ersten und zweiten Detektorsignals D1 und D2 ferner zu entnehmen ist, weichen diese insbesondere in den Randbereichen auch in ihrer Höhe voneinander ab. Ein aus einer Vielzahl von entsprechenden ersten und zweiten Detektorsignalen zusammengesetztes Bild zeigt dadurch im Randbereich periodische Helligkeitsschwankungen von Zeile zu Zeile.

Zur Reduktion oder Eliminierung solcher Artefakte wird vorzugsweise die Intensität des Stimulationslichtstrahls während des Scans in Trace- und Retrace-Richtung V bzw. R in Abhängigkeit von der jeweiligen aktuellen Position des Strahls auf der Speicherleuchtstoffschicht variiert. Vorzugsweise wird hierbei die Leistung der Lichtquelle, insbesondere des Lasers 2, vorübergehend erhöht, nachdem eine Umkehr der Bewegungsrichtung von Trace V auf Retrace R erfolgt ist, so dass während der Bewegung des Stimulationslichtstrahls 3' im Bereich des - im Beispiel der Fig. 3 - rechten Randes der Speicherleuchtstoffschicht 1 die Intensität des Stimulationslichtstrahls 3' erhöht wird und entsprechend höhere zweite Detektorsignale D2 für den rechten Randbereich erhalten werden.

Alternativ oder zusätzlich wird die Laserleistung vorübergehend erhöht, nachdem eine Umkehr der Bewegungsrichtung von Retrace R auf Trace V erfolgt ist, so dass während der Bewegung des Stimulationslichtstrahls 3' im Bereich des - im Beispiel der Fig. 3 - linken Randes der Speicherleuchtstoffschicht 1 die Intensität des Stimulationslichtstrahls 3' erhöht wird und entsprechend höhere erste Detektorsignale D1 für den linken Randbereich erhalten werden.

Auf Grund des destruktiven Ausleseprozesses und des Nachleuchtens des Speicherphosphors ist die Punktbildfunktion (PSF) des Abbildungssystems gegenüber der Position des Laserspots auf der Speicherleuchtstoffschicht versetzt und hat zudem einen leicht asymmetrisch geformten Peak. Durch die unterschiedliche Bewegungsrichtung des Laserspots auf der Speicherleuchtstoffschicht 1 ergeben sich je nach Schwingrichtung des Ablenkelements 4 somit unterschiedliche Punktbildfunktionen. Auch dies trägt u.a. zu einem Ausfransen von Kanten bei.

Figur 5 zeigt ein Beispiel für den Verlauf einer ersten und zweiten Punktbildfunktion PSF1 bzw. PSF2 entlang der Fastscan-Richtung x. Die erste Punktbildfunktion PSF1 spiegelt den räumlichen Verlauf des ersten Detektorsignals wider, das erhalten wird, wenn die Speicherleuchtstoffschicht 1 durch einen in Trace-Richtung V bewegten Stimulationslichtstrahl 3' punktförmig mit Stimulationslicht bestrahlt wird. Entsprechendes gilt für die zweite Punktbildfunktion PSF2. Wie dem Beispiel zu entnehmen ist, haben die beiden Punktbildfunktionen PSF1 und PSF2 einen asymmetrischen Verlauf; ferner sind die Schwerpunkte bzw. Peaks der beiden Punktbildfunktionen PSF1 und PSF2 relativ zueinander verschoben.

Die beiden Punktbildfunktionen PSF1 und PSF2 können a priori bestimmt werden, beispielsweise durch Messung an einer Speicherleuchtstoffschicht oder durch eine numerische Simulation des Ausleseprozesses. Auf Basis der vorab ermittelten Punktbildfunktionen PSF1 und PSF2 kann dann, beispielsweise mittels eines Wienerfilters, eine Rückfaltung der ersten bzw. zweiten Detektorsignale D1 bzw. D2 durchgeführt werden, was im resultierenden Bild, das aus einer Vielzahl von ersten und zweiten Detektorsignalen D1 und D2 zusammengesetzt ist, zu symmetrisierten Kantenverläufen führt, so dass die vorstehend beschriebenen Artefakte in Form ausgefranster Kanten aus dem Bild eliminiert werden.

Alternativ zur Verwendung der Punkbildfunktionen kann der Kantenverlauf im Bild auch mittels eines empirischen Filters symmetrisiert werden, wobei vorzugsweise angenommen wird, dass Abweichungen im Detektorsignalverlauf proportional zur Krümmung, d.h. zur zweiten Ableitung, des Signals sind. Zur Verbesserung des Rauschverhaltens kann es von Vorteil sein, die zweite Ableitung auf Basis eines geglätteten Signals zu berechnen.

Die PMT-Empfindlichkeit kann sich während des Scans ändern und ist in der Regel von der Vorgeschichte des Signals abhängig. Da sich diese für die beiden Schwingrichtungen signifikant unterscheiden kann, führt dies unter Umständen zu Bildartefakten. Zur Korrektur kann die jeweils aktuelle PMT Empfindlichkeitsverlust während des Scans anhand eines Modells ermittelt und kompensiert werden. Hierfür wird vorzugsweise zunächst eine Differentialgleichung für die PMT-Empfindlichkeit aufgestellt, die dann anhand des gemessenen Signalverlaufs, also des Verlaufs der ersten bzw. zweiten Detektorsignale D1 bzw. D2, mittels analytischer oder numerischer Methoden (beispielsweise im Euler-Verfahren) während des Scans integriert wird.

Alternativ oder zusätzlich ist es auch vorteilhaft, eine sog. phänomenologische Korrektur der ersten und/oder zweiten Detektorsignale D1 bzw. D2 vorzunehmen, indem die bei unterschiedlichen Bewegungsrichtungen erhaltenen ersten und zweiten Detektorsignalverläufe D1 und D2 miteinander verglichen werden. Dieser Ansatz basiert auf der Erkenntnis, dass sich alle systembedingten Unterschiede des Scanprozesses aufgrund der beiden unterschiedlichen Bewegungsrichtungen des Stimulationslichtstrahls 3' im erhaltenen Bild als eine artifizielle 2er-Periode entlang der Slowscan-Richtung TR der Speicherleuchtstoffschicht 1 niederschlagen (sog. "2er-Banding"). In einem phänomenologischen Ansatz werden die hierfür verantwortlichen physikalischen Ursachen nicht als bekannt vorausgesetzt, sondern der Fehler anhand der in den ersten und zweiten Detektorsignalen enthaltenen Bilddaten selbst abgeschätzt und korrigiert, indem ein Fehlerprofil anhand der gemessenen Bilddaten ermittelt oder abgeschätzt wird, das Fehlerprofil zur genaueren Isolierung des Artefakts gegebenenfalls gefiltert wird und der Fehler schließlich anhand des gefilterten Fehlerprofils korrigiert wird.

Eine bevorzugte Umsetzung dieses Ansatzes wird nachfolgend anhand von Fig. 3 näher erläutert.

Als Fehlerprofil F(x, y) wird für jedes Pixel mit den Koordinaten x und y eine relative Abweichung seines Wertes P(x, y) zu den aus den Nachbarzeilen (d.h. in entgegengesetzter Bewegungsrichtung gescannten Zeilen) interpolierten Werten P(x, y-1) und P(x, y+1) berechnet. Im gezeigten Beispiel entspricht der Wert P(x, y) des eingezeichneten Pixels der Höhe des ersten Detektorsignals D1 am Ort (x, y), während die Werte P(x, y-1) und P(x, y+1) der eingezeichneten benachbarten Pixel der Höhe des zweiten Detektorsignals D2 am Ort (x, y-1) bzw. (x, y+1) entsprechen.

Im Fall einer linearen Interpolation ergibt sich für das Fehlerprofil F(x, y):

$$F(x,y) = \frac{2 \cdot P(x,y)}{P(x,y-1) + P(x,y+1)}$$

Das so ermittelte Fehlerprofil F(x, y) enthält neben dem zu korrigierenden Fehler noch Bildinformation. Dies sind in obigem Beispiel einer linearen Interpolation gerade die nichtlinearen Anteile der Signalverläufe. Da derartige Abweichungen jedoch nur auf kurzen Längenskalen (also bei hohen Ortsfrequenzen) auftreten, können sie vorzugsweise in einem zweiten Schritt durch einen Tiefpassfilter T eliminiert werden, beispielsweise durch einen Running-Average- oder Median-Filter. Die Fehlerwerte in den beiden Schwingrichtungen unterscheiden sich systematisch und werden daher vorzugsweise getrennt betrachtet.

Das in dieser Weise berechnete Fehlerprofil gibt artifizielle Relativabweichungen des jeweiligen Signalpegels, z.B. des ersten Detektorsignalverlaufs, zur jeweils anderen Bewegungsrichtung, z.B. des zweiten Detektorsignalverlaufs, an. Zur Korrektur der Artefakte werden die ersten und zweiten Signalpegel aneinander angeglichen. Vorzugsweise werden hierbei die Werte P(x, y) der Pixel an den Orten (x, y) durch das für den jeweiligen Ort (x, y) ermittelte Fehlerprofil F(x, y) dividiert.

Vorzugsweise wird dies sowohl auf die Werte P(x, y) der ersten Detektorsignale D1 als auch auf die Werte P(x, y) der zweiten Detektorsignale D2 angewendet. Alternativ ist es aber auch möglich, ein entsprechend modifiziertes Fehlerprofil nur auf die Werte P(x, y) eines der beiden Detektorsignale D1 oder D2 anzuwenden.

**Patentansprüche**

1. Verfahren zum Auslesen von in einer Speicherleuchtstoffschicht (1) gespeicherten Röntgenbildinformationen, bei welchem

    - ein Stimulationslichtstrahl (3), welcher die Speicherleuchtstoffschicht (1) zur Aussendung von Emissionslicht anregen kann, mit einem Ablenkelement (4) abgelenkt und dabei abwechselnd in einer ersten Richtung (V) und in einer der ersten Richtung (V) entgegengesetzten zweiten Richtung (R) über die Speicherleuchtstoffschicht (1) bewegt wird und
    - während der Bewegungen des Stimulationslichtstrahls in der ersten und zweiten Richtung von der Speicherleuchtstoffschicht ausgesandtes Emissionslicht mittels eines Detektors detektiert und in entsprechende erste bzw. zweite Detektorsignale umgewandelt wird,

**dadurch gekennzeichnet, dass**

    - erste und zweite Detektorsignale, welche während der Bewegungen des Stimulationslichtstrahls in der ersten bzw. zweiten Richtung erhalten wurden, miteinander verglichen werden und

- die ersten und/oder zweiten Detektorsignale in Abhängigkeit vom Ergebnis dieses Vergleichs korrigiert werden.

2. Verfahren zum Auslesen von in einer Speicherleuchtstoffschicht (1) gespeicherten Röntgenbildinformationen, bei welchem

- ein Stimulationslichtstrahl (3), welcher ein Referenzobjekt und die Speicherleuchtstoffschicht (1) zur Aussendung von Emissionslicht anregen kann, mit einem Ablenkelement (4) abgelenkt und dabei abwechselnd in einer ersten Richtung (V) und in einer der ersten Richtung (V) entgegengesetzten zweiten Richtung (R) über das Referenzobjekt bzw. die Speicherleuchtstoffschicht (1) bewegt wird und
- während der Bewegungen des Stimulationslichtstrahls in der ersten und zweiten Richtung vom Referenzobjekt bzw. von der Speicherleuchtstoffschicht ausgesandtes Emissionslicht mittels eines Detektors detektiert und in entsprechende erste bzw. zweite Detektorsignale umgewandelt wird,

**dadurch gekennzeichnet, dass**

- erste und zweite Detektorsignale, welche während der Bewegungen des Stimulationslichtstrahls über das Referenzobjekt in der ersten bzw. zweiten Richtung erhalten wurden, miteinander verglichen werden und
- erste und/oder zweite Detektorsignale, welche während der Bewegungen des Stimulationslichtstrahls über die Speicherleuchtstoffschicht (1) in der ersten bzw. zweiten Richtung erhalten wurden, in Abhängigkeit vom Ergebnis dieses Vergleichs korrigiert werden.

3. Verfahren nach Anspruch 1 oder 2, wobei erste und zweite Detektorsignale hinsichtlich der enthaltenen Bildinformationen miteinander verglichen werden.

4. Verfahren nach einem Ansprüche 1 bis 3, wobei erste und zweite Detektorsignale durch Ermittlung einer Korrelation, insbesondere einer Korrelationsfunktion, zwischen den ersten und zweiten Detektorsignalen miteinander verglichen werden.

5. Verfahren nach einem der vorangehenden Ansprüche, wobei aus dem Vergleich der ersten und zweiten Detektorsignale miteinander ein etwaiger räumlicher Versatz zwischen den ersten und zweiten Detektorsignalen ermittelt wird.

6. Verfahren nach Anspruch 5, wobei die ersten und/oder zweiten Detektorsignale in der Weise korrigiert werden, dass der ermittelte räumliche Versatz eliminiert oder zumindest vermindert wird.

7. Verfahren nach einem der vorangehenden Ansprüche, wobei erste und zweite Detektorsignale durch Ermittlung, insbesondere Abschätzung, eines Fehlerprofils, welches Abweichungen zwischen mindestens einem ersten und mindestens einem zweiten Detektorsignal hinsichtlich der darin enthaltenen Informationen wiederspiegelt, miteinander verglichen werden.

8. Verfahren nach Anspruch 7, wobei das, insbesondere abgeschätzte, Fehlerprofil einer Filterung unterzogen wird.

9. Verfahren nach Anspruch 8, wobei durch die Filterung des, insbesondere abgeschätzten, Fehlerprofils ein etwaiger Artefakt isoliert wird, welcher davon herrührt, dass der Stimulationslichtstrahl (3) abwechselnd in der ersten Richtung (V) und in der der ersten Richtung (V) entgegengesetzten zweiten Richtung (R) über die Speicherleuchtstoffschicht (1) bewegt wird.

10. Verfahren nach einem der Ansprüche 7 bis 9, wobei erste und/oder zweite Detektorsignale anhand des, gegebenenfalls gefilterten, Fehlerprofils bzw. des ermittelten Artefakts korrigiert werden.

11. Vorrichtung zum Auslesen von in einer Speicherleuchtstoffschicht (1) gespeicherten Röntgenbildinformationen mit

- einer Lichtquelle zur Erzeugung eines Stimulationslichtstrahls (3), welcher die Speicherleuchtstoffschicht (1) zur Aussendung von Emissionslicht anregen kann,
- einem Ablenkelement (4) zur Ablenkung des Stimulationslichtstrahls, so dass dieser abwechselnd in einer ersten Richtung (V) und in einer der ersten Richtung (V) entgegengesetzten zweiten Richtung (R) über die Speicherleuchtstoffschicht (1) bewegt wird, und
- einem Detektor zur Erfassung des während der Bewegungen des Stimulationslichtstrahls in der ersten und zweiten Richtung von der Speicherleuchtstoffschicht ausgesandten Emissionslichts und zur Umwandlung des erfassten Emissionslichts in entsprechende erste bzw. zweite Detektorsignale,

**gekennzeichnet durch**

eine Steuerungseinheit zur Verarbeitung der ersten und zweiten Detektorsignale in der Weise, dass

- erste und zweite Detektorsignale, welche während der Bewegungen des Stimulationslichtstrahls in der ersten bzw. zweiten Richtung erhalten wurden, miteinander verglichen werden und
- die ersten und/oder zweiten Detektorsignale in Abhängigkeit vom Ergebnis dieses Vergleichs korrigiert werden.

12. Vorrichtung zum Auslesen von in einer Speicherleuchtstoffschicht (1) gespeicherten Röntgenbildinformationen mit

- einer Lichtquelle zur Erzeugung eines Stimulationslichtstrahls (3), welcher ein Referenzobjekt und die Speicherleuchtstoffschicht (1) zur Aussendung von Emissionslicht anregen kann,
- einem Ablenkelement (4) zur Ablenkung des Stimulationslichtstrahls, so dass dieser abwechselnd in einer ersten Richtung (V) und in einer der ersten Richtung (V) entgegengesetzten zweiten Richtung (R) über das Referenzobjekt bzw. die Speicherleuchtstoffschicht (1) bewegt wird, und
- einem Detektor zur Erfassung des während der Bewegungen des Stimulationslichtstrahls in der ersten und zweiten Richtung vom Referenzobjekt bzw. von der Speicherleuchtstoffschicht ausgesandten Emissionslichts und zur Umwandlung des erfassten Emissionslichts in entsprechende erste bzw. zweite Detektorsignale,

**gekennzeichnet durch**

eine Steuerungseinheit zur Verarbeitung der ersten und zweiten Detektorsignale in der Weise, dass

- erste und zweite Detektorsignale, welche während der Bewegungen des Stimulationslichtstrahls über das Referenzobjekt in der ersten bzw. zweiten Richtung erhalten wurden, miteinander verglichen werden und
- erste und/oder zweite Detektorsignale, welche während der Bewegungen des Stimulationslichtstrahls über die Speicherleuchtstoffschicht (1) in der ersten bzw. zweiten Richtung erhalten wurden, in Abhängigkeit vom Ergebnis dieses Vergleichs korrigiert werden.

FIG. 1

Fig. 2

Fig. 3

Fig. 4

Fig. 5

Europäisches
Patentamt

European
Patent Office

Office européen
des brevets

**EUROPÄISCHER RECHERCHENBERICHT**

Nummer der Anmeldung

EP 13 00 1978

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | EP 0 131 154 A1 (FUJI PHOTO FILM CO LTD [JP]) 16. Januar 1985 (1985-01-16)<br>* Seite 6 *<br>* Seite 7, Zeile 20 - Zeile 25 *<br>* Seite 8, Zeile 21 - Zeile 24 *<br>* Seite 8, Zeile 5 - Zeile 8 *<br>* Seite 10, Zeile 17 - Zeile 21 *<br>* Seite 11, Zeile 12 - Zeile 27 *<br>* Seite 13 - Seite 14; Abbildungen *<br>----- | 1-12 | INV.<br>G01T1/20 |
| X | EP 1 359 741 A2 (FUJI PHOTO FILM CO LTD [JP]) 5. November 2003 (2003-11-05)<br>* Absatz [0017] - Absatz [0019] *<br>* Absatz [0024] - Absatz [0026] *<br>* Absatz [0044] - Absatz [0045] *<br>* Absatz [0056] - Absatz [0059] *<br>* Absatz [0065] *<br>* Absatz [0070]; Abbildungen *<br>----- | 1,3,4,11 | |
| | | | RECHERCHIERTE SACHGEBIETE (IPC)<br><br>G01T<br>G03B |

Der vorliegende Recherchenbericht wurde für alle Patentansprüche erstellt

| Recherchenort | Abschlußdatum der Recherche | Prüfer |
|---|---|---|
| Den Haag | 30. September 2013 | Eberle, Katja |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 00 1978

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2013

| Im Recherchenbericht angeführtes Patentdokument | Datum der Veröffentlichung | Mitglied(er) der Patentfamilie | Datum der Veröffentlichung |
|---|---|---|---|
| EP 0131154 A1 | 16-01-1985 | DE 3470231 D1<br>EP 0131154 A1<br>JP H084297 B2<br>JP S59228467 A<br>US 4551626 A | 05-05-1988<br>16-01-1985<br>17-01-1996<br>21-12-1984<br>05-11-1985 |
| EP 1359741 A2 | 05-11-2003 | EP 1359741 A2<br>JP 3913602 B2<br>JP 2003319147 A<br>US 2004020987 A1 | 05-11-2003<br>09-05-2007<br>07-11-2003<br>05-02-2004 |

EPO FORM P0461